Europäisches Patentamt

European Patent Office

Office européen des brevets

(11) Veröffentlichungsnummer: **0 010 659**
A1

# (12) EUROPÄISCHE PATENTANMELDUNG

(21) Anmeldenummer: **79103899.5**

(22) Anmeldetag: **11.10.79**

(51) Int. Cl.³: **H 05 K 7/18**, B 41 J 3/46

(30) Priorität: **27.10.78 DE 2846787**

(43) Veröffentlichungstag der Anmeldung: **14.05.80**
**Patentblatt 80/10**

(84) Benannte Vertragsstaaten: **AT BE CH FR GB**

(71) Anmelder: **Kienzle Apparate GmbH, Heinrich-Hertz-Strasse Postfach 1650, D-7730 Villingen-Schwenningen (DE)**

(72) Erfinder: **Bartholomäi, Gunther, Freiburgerstrasse 55, D-7730 Villingen-Schwenningen (DE)**
Erfinder: **Brendel, Fred, Ostpreussenstrasse 12, D-8012 Ottobrunn (DE)**
Erfinder: **Field, Roger, Cincinatte 41, D-8000 München 90 (DE)**
Erfinder: **Schultes, Herbert H., Rodelbahnstrasse 1, D-8080 Fürstenfeldbruck (DE)**

(54) **Bedientisch für eine Daten- bzw. Textverarbeitungsanlage.**

(57) Der Bedientisch (1) besteht aus einer Tastatur (2), einem Bildschirm (3) und einer Belegablage (4). Die hintere Stützfläche (16) der Belegablage und der Bildschirm sind fluchtend angeordnet, sie berühren sich mittig hinter dem Alpha-Teil (5) der Tastatur, die Bildschirmfläche (11) ist schräg angeordnet. Eine lose angeordnete zusätzliche Belegablage ist verschiebbar auch in eine Position, in der der Alpha-Teil (5) der Tastatur abgedeckt ist.

EP 0 010 659 A1

0010659

Bedientisch für eine Daten- bzw. Textverarbeitungsanlage

Die Erfindung bezieht sich auf einen Bedientisch für eine Daten-
bzw. Textverarbeitungsanlage, welcher eine Tastatur, ein Datensichtgerät und eine Belegablage umfaßt. Die Belegablage besteht
aus einer hinteren und aus einer unteren Stützfläche.

Wenn man einen Bedientisch aus den oben aufgeführten Elementen
aufbauen will, muß man aus ergonomischen Gründen darauf Rücksicht nehmen, daß diese Elemente für die Bedienungsperson optimal zueinander angeordnet sind. Dabei ist davon auszugehen, daß
die Tastaturen solcher Daten- bzw. Textverarbeitungsanlagen von
heute im allgemeinen sowohl einen sog. Alphateil als auch eine
numerische Blocktastatur umfassen. Üblich ist es auch, den Alphateil und die numerische Blocktastatur so zueinander anzuordnen, daß der Alphateil links und die numerische Blocktastatur
rechts angeordnet sind, weil die Bedienung der Alphatastatur
selbstverständlich mit beiden Händen erfolgt, die Bedienung der
numerischen Blocktastatur jedoch ausschließlich mit der rechten
Hand.

Von dieser Ausgangssituation ausgehend muß nun sichergestellt
werden, daß die Bedienungsperson sowohl den Bildschirm des Datensichtgerätes als auch die Belegablage in optimaler Anordnung
für die Bedienungszwecke hat. Gedacht ist für die Belegablage
insbesondere an eine Vorrichtung, die DIN A 4-Blätter oder größere Formate, beispielsweise auch eine Mehrzahl von gebundenen
oder ungebundenen derartigen DIN A 4-Blättern aufzunehmen in der
Lage ist. Es soll sich dabei vor allem um Beleggut handeln, welches nicht nur der kurzfristigen Einsichtnahme, wie dies beispielsweise bei Schecks und dergl. der Fall ist, dient, das also in der Regel eine Vielzahl von Daten trägt, die zu beliebigen
Zeiten und in beliebigen Abständen von der Bedienungsperson abgelesen und eingegeben werden müssen. Derartiges Belegmaterial,
was hinsichtlich der Auffindung der gewünschten Daten einer ständigen Neuorientierung bedarf, sollte selbstverständlich in optimaler Lage sowohl zur Tastatur als auch für visuelle Kontrollzwecke zum Bildschirm des Datensichtgerätes angeordnet sein.

Um die oben skizzierte Aufgabenstellung zu lösen, werden erfindungsgemäß

a) die hintere Stützfläche der Belegablage und der Bildschirm
   des Datensichtgerätes im wesentlichen zueinander fluchtend
   angeordnet,

b) die hintere Stützfläche der Belegablage und der Bildschirm
   so einander zugeordnet, daß sie sich etwa mittig, oberhalb
   des Alphateiles der Tastatur berühren, wobei der mittlere
   Abstand zwischen dem Bildschirm, der Belegablage und der Tastatur einerseits und dem Auge des Betrachters andererseits
   etwa 400 bis 500 mm beträgt und

c) die Belegablage links neben dem Datensichtgerät angeordnet.

Bei dieser Anordnung der Teile zueinander wird davon ausgegangen, daß die Bedienungsperson in aller Regel mittig vor dem Alphateil der Tastatur sitzt, so daß sich auf der gleichen Linie
auch die Belegablage und der Bildschirm des Datensichtgerätes
berühren, so daß der gleiche Abstand für die Daten auf der Belegablage sowohl als auch für deren visuelle Überprüfung auf
dem Bildschirm des Datensichtgerätes gegeben ist. Im übrigen ermöglicht die relative Anordnung der Belegablage, des Bildschirmes und der Tastatur auch insofern ein optimales Arbeiten als
die rechte Hand dazu benutzt werden kann, numerische Werte über
die Blocktastatur einzutasten, gleichzeitig aber mit der linken
Hand auf dem Belegmaterial die korrespondierenden, abzulesenden
Positionen zu markieren.

Eine weitere Verbesserung der Bedienbarkeit ist dadurch gegeben,
daß der Bildschirm des Datensichtgerätes in seiner Grundstellung
um eine gedachte vertikale Achse so gedreht ist, daß der rechte
Bildrand etwa den gleichen Abstand vom Auge des Betrachters hat
wie der linke Bildrand. Durch diese Anordnung der Bildschirmfläche des Datensichtgerätes ist eine gleichmäßig gute Lesbarkeit
der angezeigten Daten über die ganze Bildschirmfläche gegeben.

Für den Fall, daß ein derartiger Bedientisch für eine Datenverarbeitungsanlage auch dazu ausgenutzt werden soll, Belege zu bearbeiten, die beispielsweise Scheckformat haben und die im allgemeinen nur das Ablesen von ein oder zwei Nummern erfordern,
die jeweils an der gleichen Stelle auf diesen Belegen angeordnet
sind, ist in weiterer Ausbildung der Erfindung vorgesehen, daß
eine zweite zusätzliche Belegablage seitlich neben der Tastatur
für schnelle Belegverarbeitung angeordnet ist.

Da für die Bearbeitung kleiner Belege im allgemeinen nur die numerische Tastatur benötigt wird, ist die zweite zusätzliche Belegablage ein  lose aufsetzbares und parallel zur ersten Belegablage verschiebbares Teil, derart daß diese Belegablage möglichst dicht an die numerische Tastatur herangeschoben werden
kann, wobei sie sogar die Alphatastatur ganz oder teilweise überdecken kann.

Die aufgesetzte zusätzliche Belegablage ist dabei so ausgebildet,
daß sie zusammen mit der anderen ersten Belegablage im heruntergeklappten Zustande eine von Erhöhungen freie, durchgehende Ablagefläche bildet. Auf diese Art und Weise ist es möglich, den
vorhandenen Raum für die Unterbringung des zu bearbeitenden Belegmaterials optimal auszunutzen.

Einzelheiten der erfindungsgemäßen Anordnung seien im folgenden
anhand der beiliegenden Zeichnungen im einzelnen näher erläutert.
In diesen Zeichnungen zeigt

    Fig. 1 eine Gesamtansicht des Bedienungstisches
    der Erfindung, während

    Fig. 2 eine andere Ansicht der Teile gemäß Fig. 1
    mit einem zusätzlichen Detail wiedergibt.

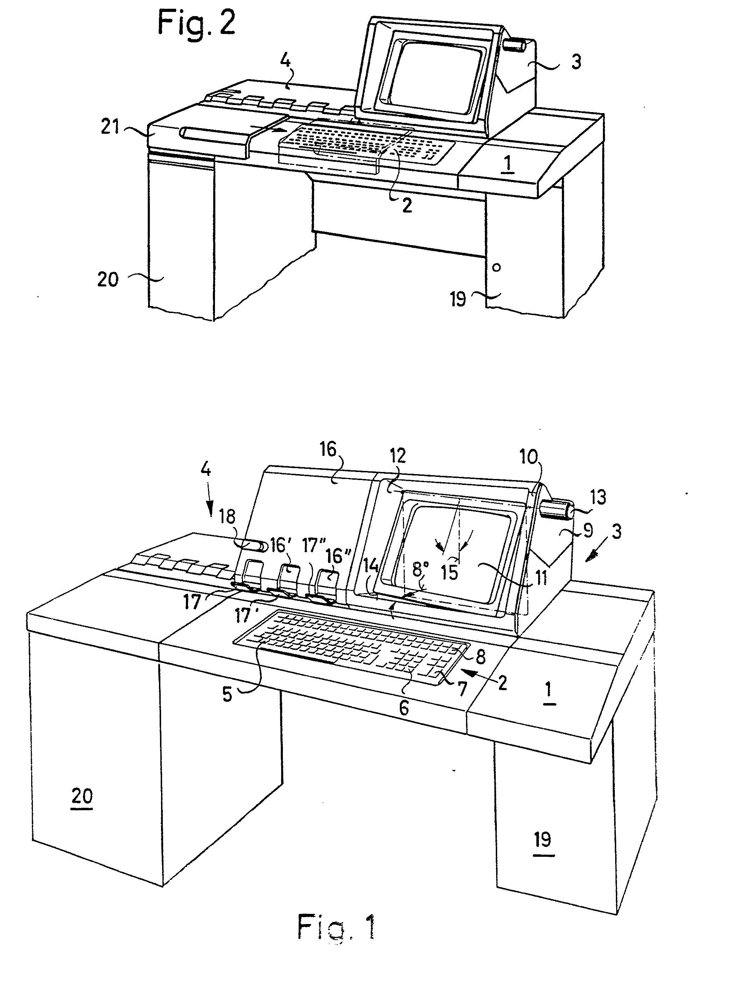

Der Bedienungstisch 1 gemäß Fig. 1 umfaßt eine Tastatur 2, ein
Bildschirmgerät 3 und eine oder mehrere Belegablagen 4. Der Bedienungstisch 1 ist nach vorne etwas abgeschrägt, um eine optimale Bedienbarkeit zu erzielen, während er in seinem hinteren
Teil waagerecht ausgebildet ist. Die Tastatur 2 besteht aus
einem Alphateil 5, einer numerischen Blocktastatur 6, einer Funktionstastatur 7 und einem zusätzlichen Tasten- und Anzeigefeld 8.
Es sei an dieser Stelle darauf hingewiesen, daß die Tastatur
selbstverständlich auch in Details anders aufgebaut sein kann,
als dies in der Fig. 1 gezeigt ist, was jedoch für die Erfindung
an sich keine Rolle spielt.

Das Datensichtgerät 3 besteht aus einem Gehäuse 9, dessen vorderer Rahmenteil 10 von unten vorne nach oben zu etwas schräg zur
Senkrechten verläuft, wie dies beispielsweise bei Notenständern
und dergl. üblich ist. Innerhalb des Gehäuses 9 ist der Bildschirm 11 angeordnet, wobei die Blende 12, die den Bildschirm
umgibt, auf ihrer linken Seite tiefer eingezogen ist als auf
ihrer rechten Seite. In der Grundstellung hat daher die Fläche
des Bildschirmes 11 innerhalb des Datensichtgerätes 3 eine
Schrägstellung, die etwa $8^{\circ}$ beträgt, gerechnet vom feststehenden
rechten Bildrand des Bildschirmes. Anders ausgedrückt, der Bildschirm 11 ist in seiner Grundstellung 9 innerhalb des Gehäuses
so angeordnet, daß der rechte Bildrand etwa den gleichen Abstand
vom Betrachter hat wie der linke Bildrand. Zur Erläuterung sei
noch darauf hingewiesen, daß am Gehäuse 9 des Datensichtgerätes
noch eine Verstelleinrichtung 13 vorgesehen ist, die es erlaubt,
den Bildschirm 11 innerhalb des Gehäuses 9 so zu verschwenken,
daß sein unterer Rand 14 nach hinten verschwenkt wird bis in
eine Stellung, die einer gedachten vertikalen Linie 15 entspricht.
Um diese vertikale Linie 15 ist auch der Bildschirm 11 in seiner
Grundstellung verschwenkt.

Neben dem Gehäuse 9 mit dem vorderen Rahmenteil 10 als Abschluß
sind ein oder zwei Belegablagen 4 angeordnet. Diese Belegablagen 4 bestehen aus einer hinteren Stützfläche 16 für die Belege und aus einer verschwenkbar dazu angeordneten unteren Stützfläche 17. Die untere Stützfläche 17 besteht an den Stellen, an denen sie über die hintere Stützfläche 16 hinausragt, aus einzelnen Zungen 17' und 17", die so das dort befindliche Belegmaterial unterstützen, wobei durch die Durchbrüche zwischen den einzelnen Zungen 17' und 17" das Entnehmen des Belegmaterials von unten erleichtert wird.

Die Belegablagen 4 können nach hinten verschwenkt werden, nachdem man eine Raste 18 gelöst hat. Durch Hochklappen der unteren Stützfläche 17 und leichtem Druck auf die hintere Stützfläche 16 kann dann die Belegablage 4 in eine Position gebracht werden, wie sie sich aus Fig. 1 links, aber auch aus Fig. 2 ergibt. In diesem Falle verschwinden die Zungen 17' und 17" in entsprechenden Ausnehmungen 16' und 16" der hinteren Stützfläche 16, so daß eine ebene und durchgehende Ablagefläche für beliebiges Beleggut entsteht.

Die Höhe des Bedienungstisches auf den Schränken 19 und 20, die der Unterbringung der elektronischen Teile der Maschine dienen, und der Abstand der Tastatur sowohl als auch des Bildschirmes 11 und der Belegablage 4 vom Auge des Betrachters ist so gewählt, daß sich ein mittlerer Betrachtungsabstand von 400 bis 500 mm ergibt, wenn die Bedienungsperson mittig vor dem Alphateil 5 der Tastatur 2 sitzt. Dabei ist zu beachten, daß auch das Gehäuse 9 des Datensichtgerätes mit dem vorderen Rahmenteil 10 und die hintere Stützfläche 16 der Belegablage 4 sich mittig vor dem Alphateil 5 der Tastatur berühren.

Bei dieser relativen Anordnung der Tastatur 2, des Datensichtgerätes 9 mit dem Bildschirm 11 und der Belegablage 4 mit der hinteren Stützfläche 16 ergibt sich die Möglichkeit, die Alphatastatur 5 beidhändig zu bedienen und gleichzeitig bei nur geringfügigen Kopfbewegungen sowohl das Belegmaterial auf der Belegablage 4 als auch den Bildschirm 11 zu betrachten. Das Belegmaterial, welches auf die Belegablage 4 aufgelegt werden soll, soll vorzugs-

weise solches Belegmaterial sein, welches nicht nur einer kurzfristigen Bearbeitung bedarf. Es kann sich also beispielsweise
um Listen und Formulare mit einer Vielzahl von Daten im Format
DIN A 4 und DIN A 3 handeln, wobei selbstverständlich auch Ordner Verwendung finden können. Insgesamt gesehen wird es sich
aber um Material handeln, welches also längerfristig bei der Arbeit benötigt wird.

Da vielfach derartige Bedienungstische aber nicht nur bei komplizierten Datenverarbeitungsvorgängen eingesetzt werden, sondern auch für die Datenerfassung, wo es sich beispielsweise nur
um das Ablesen und Eintasten von Daten von einem oder mehreren
Schecks handelt, die in diesem Scheck immer in der gleichen Position zu finden sind, ist in weiterer Ausbildung der Erfindung,
wie dies aus Fig. 2 ersichtlich ist, noch eine weitere Belegablage 21 vorgesehen, die seitlich neben der Tastatur 2 aufgesetzt
werden kann. Diese Belegablage 21 kann so ausgebildet sein, daß
sie mit dem Maschinengestell verbunden wird. Bei der gezeigten
Anordnung jedoch handelt es sich um ein lose aufsetzbares Teil,
welches mit Führungsnuten an seiner Rückseite so versehen ist,
daß es parallel zur Belegablage 4 verschiebbar ist. Werden hier
Belege verarbeitet, die nur numerische Werte tragen, dann ist es
sogar möglich, die Belegablage 21 so weit nach rechts zu verschieben, daß sie ganz oder teilweise den Alphateil 5 der Tastatur überdeckt, so daß dann mit der rechten Hand nur die numerische Blocktastatur 6 bedient wird, während auf der Belegablage
21 die Belegstapel mit der linken Hand Stück um Stück verarbeitet, d.h. auch gewendet werden. Die zusätzliche Ablage 21 ist
dabei so angeordnet, daß sie sowohl bei hochgeklappter Belegablage 4 als auch bei heruntergeklappter Belegablage 4 aufgesetzt
werden kann, so daß also beide Belegablagen kombiniert verwendbar sind.

0010659
1o.1o.1978
o7o pa zw
Akte 1628

## Patentansprüche:

1. Bedientisch für eine Daten- bzw. Textverarbeitungsanlage, umfassend eine Tastatur, ein Datensichtgerät und eine eine hintere und eine untere Stützfläche aufweisende erste Belegablage,

   dadurch gekennzeichnet, daß

   a) die hintere Stützfläche (16) der Belegablage (4) und der Bildschirm (11) des Datensichtgerätes (9) im wesentlichen miteinander fluchtend angeordnet sind, daß

   b) die hintere Stützfläche (16) der Belegablage und der Bildschirm (11) einander etwa mittig oberhalb des Alphateiles (5) der Tastatur (2) berühren, derart daß der mittlere Abstand zwischen dem Bildschirm, der Belegablage und der Tastatur einerseits und dem Auge des Betrachters andererseits etwa 400 bis 500 mm beträgt, und daß

   c) die Belegablage (4) links neben dem Datensichtgerät (9) angeordnet ist.

2. Bedientisch nach Anspruch 1, dadurch gekennzeichnet, daß der Bildschirm (11) um eine gedachte vertikale Achse (15) so gedreht ist, daß der rechte Bildrand etwa den gleichen Abstand vom Auge des Betrachters hat wie der linke Bildrand.

3. Bedientisch nach Anspruch 1, dadurch gekennzeichnet, daß die Belegablage (4) herunterklappbar ist.

4. Bedientisch nach Anspruch 1 und 3, dadurch gekennzeichnet, daß eine zweite zusätzliche horizontale Belegablage (21) seitlich neben der Tastatur für schnelle Belegverarbeitung angeordnet ist.

5. Bedientisch nach Anspruch 1, 3 und 4, dadurch gekennzeichnet, daß die zusätzliche seitliche Belegablage (21) ein lose aufsetzbares und parallel zur ersten Belegablage verschiebbares Teil ist.

6. Bedientisch nach Anspruch 1, 3 und 4, dadurch gekennzeichnet, daß die zweite zusätzliche Belegablage und die erste Belegablage im heruntergeklappten Zustande der letzteren eine von Erhöhungen im wesentlichen freie durchgehende Ablagefläche bilden.

Fig. 2

Fig. 1

0010659

Europäisches
Patentamt

**EUROPÄISCHER RECHERCHENBERICHT**

| | **EINSCHLÄGIGE DOKUMENTE** | | KLASSIFIKATION DER ANMELDUNG (Int.Cl.³) |
|---|---|---|---|
| Kategorie | Kennzeichnung des Dokuments mit Angabe, soweit erforderlich, der maßgeblicher Teile | betrifft Anspruch | H 05 K 7/18 |
| A | US - A - 3 685 019 (HARRIS-INTER-TYPE CORP.) <br> * Ansprüche; Bild 5 * <br> -- | 1 | B 41 J 3/46 |
| A | FR - A - 2 092 284 (KARL GUTMANN K.G.) <br> * Ansprüche; Bilder 1,4 * <br> -- | 1,4 | |
| A | DE - A - 2 131 511 (SCM SMITH CORONA MARCHANT) <br> * Ansprüche; Bild 2 * <br> ---- | 5 | |

**RECHERCHIERTE SACHGEBIETE (Int. Cl.³)**

```
H 05 K   7/18
         5/00
B 41 J   3/46
        29/02
A 47 B  21/00
H 02 B  15/00
```

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 04-02-1980 | VAN REETH |